# EUROPÄISCHE PATENTANMELDUNG

(11) **EP 1 707 666 A1**
(43) Veröffentlichungstag der Anmeldung: **04.10.2006**
(21) Anmeldenummer: 06002999.8
(22) Anmeldetag: 15.02.2006
(51) Int. Cl.: D06N 3/00, D06N 3/14, B32B 5/24

(54) **Synthetisches Leder, Verfahren zu dessen Herstellung und dessen Verwendung**

(30) Priorität: 30.03.2005 DE 102005014317
(71) Anmelder: Carl Freudenberg KG, 69469 Weinheim (DE)
(72) Erfinder: Jestel, Frank, 68320 Kunheim (FR)

(57) **Zusammenfassung**

Beschrieben wird ein synthetisches Leder umfassend einen Mikrofaservliesstoff, der auf einer Oberfläche eine Haftvermittlerschicht und darauf eine Schicht aus offenporigem Polyurethanschaum aufweist. Die dem Mikrofaservliesstoff abgewandte Oberfläche der Polyurethanschaumschicht wurde durch Spalten erzeugt.

Das synthetische Leder lässt sich durch ein einfaches Verfahren erzeugen, bei dem nur wenig Abfall anfällt. Die Weiterverarbeitung erfolgt vorzugsweise durch Hinterspritzen in einem Spritzgusswerkzeug.

## Beschreibung

Die vorliegende Erfindung betrifft ein neues synthetisches Leder abgeleitet von einem Polyurethanschaum, dessen Herstellung und dessen Verwendung als Oberflächenbelag für Kunststoffteile.

Der Einsatz von Produkten aus Polyurethanschäumen in Automobilinnenräumen oder in anderen Innenräumen ist bekannt.

So beschreibt die WO-A-01/10,637 ein mehrschichtiges Material für den Einsatz in Autoinnenräumen, welches einen offenzelligen Polyurethanschaum, auf dessen Oberfläche aufgebrachte Fasern pflanzlichen Ursprungs, ein hitzehärtbares Harz zum Verbinden der Fasern mit dem Polyurethanschaum und gegebenenfalls darauf angebrachte dekorative Schichten umfasst.

Aus der WO-A-00/06,375 ist ein mehrschichtiges Laminat bekannt, das aus eine Schicht aus Polyurethanschaum besteht, auf dessen beiden Oberflächen jeweils ein Non-Woven aus einer Mischung aus endlosen Fasern und aus Fasern endlicher Länge aufgebracht ist, die durch jeweils eine Klebstoffschicht mit der Schicht aus Polyurethanschaum verbunden sind. Das Laminat kann zur Schalldämmung in Autoinnenräumen eingesetzt werden.

Die Lederherstellung ist ein aufwendiger Prozeß bei dem umweltbelastende Chemikalien zum Einsatz gelangen. Es hat daher nicht an Versuchen gefehlt, künstliches Leder herzustellen, bei denen einfachere Verfahren sowie weniger umweltbelastende Chemikalien zum Einsatz kommen.

Aus dem Stand der Technik sind unterschiedlichste Konzepte zur Herstellung künstlicher Leder bekannt.

WO-A-2004/060,655 offenbart ein Verfahren zur Herstellung einer Schicht aus geschäumtem Polyurethan sowie ein daraus hergestelltes Laminat.

In der US-B-6,566,287 wird in synthetisches Leder beschrieben, das durch Imprägnieren eines speziellen Spaltfaservliesstoffes mit einem elastischen Polymer und anschließender Koagulation dieses Polymers hergestellt wird. Auf diesen imprägnierten Vliesstoff kann eine elastische Polymerschicht laminiert werden.

US-B-6,737,004 beschreibt die Herstellung eines verstreckten Spaltfaservliesstoffes. Nach einem Schrumpfprozess kann dieser mit einer wässrigen Polyurethanlösung imprägniert und danach noch mit einer Schicht kombiniert werden. Das Laminat kann als synthetisches Leder verwendet werden.

EP-A-1,300,508 beschreibt einen Mikrofaserfilz, der nach der Insel-See-Methode ("islands in the sea" Typ) hergestellt worden ist und mit einer Polyurethanlösung oder -emulsion imprägniert wurde. Der imprägnierte Filz wird gespalten und gefärbt.

Aus der JP-A-8/060,556 ist ein synthetisches Leder bekannt, das durch Imprägnieren eines Spaltfaservliesstoffes mit einer Polyurethanlösung, Koagulieren des Polyurethans und nachfolgender Oberflächenbearbeitung hergestellt wird.

Die JP-A-4/185,777 beschreibt ein synthetisches Leder, das durch Laminieren einer nicht-porösen Schicht aus Polyurethan auf ein poröses Substrat hergestellt wurde. Das Substrat wird durch Imprägnieren eines Mikrofaservliesstoffes mit einer Polyurethanlösung und Koagulieren des Polyurethans hergestellt.

In der DE-A-199 47 869 wird ein synthetisches Leder beschrieben, das aus einem mit einem Polymer imprägnierten und/oder beschichteten Vliesstoff, vorzugsweise einem Spaltfaservliesstoff, mit Flächengewichten von 100 bis 500 g/m² und hohen Zugfestigkeiten in Längs- und Querrichtung besteht. Als Imprägnierung ist ein in Dimethylformamid gelöstes Polyurethan oder ein wässriger Polyurethan-Latex vorgesehen, das nach dem Aufbringen auf den Vliesstoff ausgefällt oder koaguliert wird. Der imprägnierte Vliesstoff wird nach dem Ausbilden der Fasern enthaltenden Polyurethanoberfläche angeschliffen, um dieser Oberfläche eine lederartige Struktur zu verleihen.

In der DE-A-38 20 296 wird ein Verfahren zur Herstellung eines synthetischen Sämischleders beschrieben. Dazu wird ein synthetisches Folienmaterial hergestellt, das eine Fasern oder Vliesstoff enthaltende poröse Polyurethanmatrix und eine Abdeckschicht aus kompaktem Polyurethan umfaßt. Dieses Material wird durch Auftrennen im Bereich der Faserschicht oder des Vliesstoffes in zwei Folien mit geringerer Dicke gespalten und der Teil mit der Abdeckschicht wird an der durch Spalten erzeugten Oberfläche durch Schleifen nachbehandelt. Bei diesem Verfahren fällt bedingt durch die Weiterverwendung nur einer gespaltenen Folie ein vergleichsweise hoher Anteil an Abfall an.

Ausgehend von diesem Stand der Technik ist es Aufgabe der vorliegenden Erfindung, ein synthetisches Leder mit feiner Oberflächenstruktur bereitzustellen, das praktisch keine freistehenden Faserenden an der Oberfläche aufweist.

Eine weitere Aufgabe der vorliegenden Erfindung besteht in der Bereitstellung eines synthetischen Leders, das ohne Probleme beim Spritzguß eingesetzt werden kann und bei dem beim Hinterspritzen kein Kunststoff mit der das Lederimitat ausbildenden Schicht in Kontakt kommt.

Eine weitere Aufgabe der vorliegenden Erfindung besteht in der Bereitstellung eines einfachen Verfahrens, bei dem möglichst wenig Abfall entsteht und das mit hoher Wirtschaftlichkeit betrieben werden kann.

Die Erfindung betrifft ein synthetisches Leder umfassend einen Mikrofaservliesstoff, der auf einer Oberfläche eine Haftvermittlerschicht und darauf eine Schicht aus offenporigem Polyurethanschaum aufweist, wobei die dem Mikrofaservliesstoff abgewandte Oberfläche der Polyurethanschaumschicht durch Spalten erzeugt wurde.

Die Erfindung betrifft auch ein Verfahren zur Herstellung des oben beschriebenen synthetischen Leders umfassend die Schritte:
i) Auftragen einer Haftvermittlerschicht auf einen Mikrofaservliesstoff,
ii) Auftragen einer Schicht aus offenporigem Polyurethanschaum auf die Haftvermittlerschicht,
iii) Auftragen einer weiteren Haftvermittlerschicht auf die offenporige Polyurethanschaumschicht,
iv) Aufbringen eines weiteren Mikrofaservliesstoffes auf die weitere Haftvermittlerschicht,
v) Spalten des erzeugten Verbundstoffes im Bereich der offenporigen Polyurethanschaumschicht, und
vi) gegenbenenfalls Schleifen der durch Spalten erzeugten Oberflächen der offenporigen Polyurethanschaumschicht.

Unter Mikrofaservliesstoff sind im Rahmen dieser Beschreibung sämtliche Vliesstoffe zu verstehen, die mindestens 50 Gew. %, vorzugsweise mindestens mindestens 80 Gew. % und ganz besonders bevorzugt 100 Gew. % an Fasern mit einem Durchmesser von kleiner als 1 µm enthalten.

Bei den Fasern kann es sich um endlose Filamente, um Fasern endlicher Länge, um_Faser oder Filament-Garne oder um Gemische davon handeln.

Die erfindungsgemäß zum Einsatz gelangenden Mikrofaservliese können auf unterschiedlichste Art und Weise hergestellt werden.

Mikrofaser(gemische) oder Gemische von Mikrofasern mit Nicht-Mikrofasern können mit den gängigen Vlieslegungsverfahren, wie Nasslegen, Kardieren, Spunbond-Verfahren, Meltblown-Verfahren, Elektrospinnen oder Airlaid-Verfahren, hergestellt werden.

Erfindungsgemäß eingesetzte Mikrofaservlieststoffe weisen typischerweise Flächengewichte von 30 bis 500 g/m², vorzugsweise von 50 bis 300 g/m², auf. Ihre Dicke beträgt typischerweise 0,3 bis 3 mm, bevorzugt 0,5 bis 2 mm.

Die erfindungsgemäß eingesetzten Mikrofaservliesstoffe sind in an sich bekannter Weise stabilisiert, beispielsweise durch Vernadeln, Wasserstrahlbehandlung, thermische und/oder chemische Binder. Vorzugsweise werden mit Wasserstrahlen behandelte Mikrofaservliesstoffe eingesetzt.

Besonders bevorzugt werden Spaltfaservliesstoffe eingesetzt. Dazu werden Mehrkomponentenfäden aus nicht miteinander kompatiblen Polymeren nach dem Spunbond-Verfahren oder nach anderen Verfahren zu einem Vlies gelegt und dieses wird durch mechanische Behandlung verfestigt, wobei gleichzeitig die Mehrkomponentenfasern in feinere Bestandteile in Längsrichtung zerfallen.

Die erfindungsgemäß zum Einsatz kommenden Vliesstoffe können aus Fasern beliebiger Querschnitte bestehen. Ferner können die Fasern gekräuselt oder ungekräuselt vorliegen.

Die Mikrofaservliesstoffe können Fasern aus unterschiedlichsten Kunststoffen enthalten. Prinzipiell kann jedes faserbildende Polymer eingesetzt werden. Beispiele dafür sind Polyester, vorzugsweise Polyethylenterephthalat, Polyamide, vorzugsweise aliphatische Polyamide oder aliphatisch-aromatische Polyamide, oder Polyolefine, vorzugsweise Polypropylen.

Besonders bevorzugt werden Spaltfaser-Vliesstoffe eingesetzt, deren Filamente oder Fasern aus Polyester und aus Polyamid oder aus Polyester und aus Polyolefin oder aus Polyamid und aus Polyolefin bestehen.

Die Haftvermittlerschicht kann aus beliebigen Klebstoffen bestehen. Diese Schicht hat die Aufgabe, eine ausreichende Haftung zwischen dem Mikrofaservliesstoff und der Schicht aus Polyurethanschaum während der Verarbeitung und des Gebrauchs zu gewährleisten.

Neben Schmelzklebern werden vorzugsweise härtbare Klebstoffe eingesetzt. Beispiele für letztere sind Zweikomponentenkleber oder insbesondere hitzehärtbare Kunststoffe. Ganz besonders bevorzugt werden PolyurethanKlebstoffe eingesetzt. Diese bilden kompakte Schichten aus und gestatten eine besonders gute Verbindung zwischen Polyurethanschaum und Mikrofaservliesstoff.

Zur Ausbildung der Schicht aus offenporigem Polyurethanschaum können beliebige Systeme eingesetzt werden. Es können thermoplastische und duroplastische Polyurethanschäume verwendet werden. Das Schäumen kann durch Einsatz von chemischen und/oder physikalischen Schaumbildnern erfolgen. Das Erzeugen von offenporigen Polyurethanschäumen ist dem Fachmann bekannt.

Bevorzugt wird aliphatisches Polyurethan eingesetzt. Dieses zeichnet sich durch eine hohe Lichtechtheit aus. Unter aliphatischem Polyurethan wird im Rahmen dieser Beschreibung ein Polyurethan verstanden, das sich von aliphatischen oder cycloaliphatischen Polyisocyanaten und von aliphatischen oder cyloaliphatischen Polyolen ableitet.

Nach der Herstellung des oben beschriebenen Laminats aus Polyurethan und damit verbundenen Mikrofaservliesstoffen wird dieses durch Spalten der Schicht aus offenporigem Polyurethan in zwei Teile aufgeteilt. Das Spalten von Kunststoffschichten ist dem Fachmann bekannt.

Durch das Aufspalten innerhalb der Polyurethanschaumschicht entsteht eine Oberfläche von lederartigem Aussehen die keine Fasern aufweist. Das erfindungsgemäße Verfahren erzeugt praktisch keinen Abfall, da beide Teile des gespaltenen Materials als synthetische Leder verwendet werden können.

Die auf diese Weise erzeugten Teile können in nachfolgenden Schritten weiter verarbeitet werden. Beispielsweise lässt sich die durch Spalten erzeugte Oberfläche durch Schleifen bearbeiten.

Vorzugsweise wird das synthetische Leder durch Hinterspritzen im Spritzgussverfahren mit einem Kunststoff-Formteil verbunden. Voraussetzung hierfür ist die thermische Verformbarkeit des Trägers. Im Falle eines Mikrofaservliesstoffes, wie z.B. im US-Patent Nr. 5,899,785 beschrieben, erfolgt die thermische Verformbarkeit besonders schnell und einfach.

Gegenstand der Erfindung ist auch die Verwendung des oben beschriebenen synthetischen Leders als hinterspritzbares Dekormaterial, insbesondere für den Automobilinnenraum, sowie als Bezug für Sitzmöbel, inbesondere für Autositze.

Die folgenden Beispiele erläutern die Erfindung ohne diese zu begrenzen.

### Beispiel 1

Ein weichgemachter Spaltfaservliesstoff auf der Basis von Fasern aus Polyethylen-terephthalat und Nylon vom Flächengewicht 130 g/m² wurde auf einer herkömm-lichen 3-Kopf-Beschichtungsanlage im Rakelverfahren direkt beschichtet und laminiert.

Am ersten Streichkopf wurde mittels Luftrakel ein Polyurethan-Haftstrich aufgetragen (Spalt etwa 0,1 mm). Dabei handelte es sich um eine wässrige Dispersion mit Vernetzer. Die Haftschicht wurde im Ofen getrocknet und vernetzt. Am zweiten Streichkopf erfolgte der Auftrag eines Schaums über einen Walzenrakel mit Spalt von etwa 1 bis 4 mm. Aus einer etwa 35 bis 60 . %igen wässigen Polyurethan-Dispersion wurde mittels Schaummixer unter Zusatz von Schaumhilfsmitteln ein Schlagschaum von etwa 300 bis 800 g/L hergestellt. Nach dem Trocknen und Vernetzen wurde am dritten und letzten Streichkopf wieder ein Haftstrich mittels Walzenrakel aufgetragen. Dabei wurde die gleiche Polyurethan-Formulierung und die gleiche Einstellung verwendet wie beim Auftrag der ersten Schicht. Vor dem Trocknen wurde in den noch feuchten Haftstrich über ein Laminierwerk eine zweite Lage eines Spaltfaservliesstoffes kaschiert. Es wurde der gleiche Vliesstoff wie der als Basis eingesetzte Vliesstoff verwendet.

Das so erhaltene Laminat wurde mit Hilfe einer für die Leder- oder Kautschukverarbeitung üblichen Spaltmaschine in zwei beschichtete Spaltfaser-Bahnen gespalten. Die Oberflächen des aufgeschnittenen Schaums ähneln der eines Nubuk Leders.

### Beispiel 2

Es wurde wie in Beispiel 1 beschrieben gearbeitet. Anstelle eines Polyurethan-Haftstrichs mit Vernetzer wurde eine wässrige Dispersion eines Polyurethan-Haftstrichs ohne Vernetzer aufgetragen. Durch Spalten wurden zwei beschichtete Spaltfaser-Bahnen erzeugt. Die Oberflächen des aufgeschnittenen Schaums ähneln der eines Nubuk Leders.

## Patentansprüche

1. Synthetisches Leder umfassend einen Mikrofaservliesstoff, der auf einer Oberfläche eine Haftvermittlerschicht und darauf eine Schicht aus offenporigem Polyurethanschaum aufweist, wobei die dem Mikrofaservliesstoff abgewandte Oberfläche der Polyurethanschaumschicht durch Spalten erzeugt wurde.

2. Synthetisches Leder nach Anspruch 1, **dadurch gekennzeichnet, daß** der Mikrofaservliesstoff ein Spaltfaser-Vliesstoff ist.

3. Synthetisches Leder nach Anspruch 2, **dadurch gekennzeichnet, daß** der Spaltfaser-Viiesstoff Filamente oder Fasern aus Polyester und aus Polyamid aufweist.

4. Synthetisches Leder nach Anspruch 1, **dadurch gekennzeichnet, daß** die Haftvermittlerschicht aus einem hitzehärtbaren Kunststoff, vorzugsweise aus Polyurethan, besteht.

5. Synthetisches Leder nach Anspruch 1, **dadurch gekennzeichnet, daß** der offenporige Polyurethanschaum aus aliphatischem Polyurethan besteht.

6. Verfahren zur Herstellung eines synthetischen Leders nach Anspruch 1 umfassend die Schritte:
i) Auftragen einer Haftvermittlerschicht auf einen Mikrofaservliesstoff,
ii) Auftragen einer Schicht aus offenporigem Polyurethanschaum auf die Haftvermittlerschicht,
iii) Auftragen einer weiteren Haftvermittlerschicht auf die offenporige Polyurethanschaumschicht,
iv)Aufbringen eines weiteren Mikrofaservliesstoffes auf die weitere Haftvermittlerschicht,
v) Spalten des erzeugten Verbundstoffes im Bereich der offenporigen Polyurethanschaumschicht, und
vi)gegenbenenfalls Schleifen der durch Spalten erzeugten Oberflächen der offenporigen Polyurethanschaumschicht.

7. Verwendung des synthetischen Leders nach Anspruch 1 als hinterspritzbares Dekormaterial, insbesondere für den Automobilinnenraum, sowie als Bezug für Sitzmöbel, inbesondere für Autositze.
